# EUROPEAN PATENT APPLICATION

(11) **EP 3 637 193 A1**
(43) Date of publication of application: **15.04.2020**
(21) Application number: 18814268.1
(22) Date of filing: 05.06.2018
(51) Int. Cl.: G03G 15/20, C08K 3/04, C08L 83/07

(54) **SILICONE RUBBER COMPOSITION FOR FORMING FIXING MEMBERS, AND FIXING MEMBER**

(30) Priority: 06.06.2017 JP 2017112104
(71) Applicant: Dow Toray Co., Ltd., Shinagawa-ku Tokyo 1408617 (JP)
(72) Inventor: IRIE, Masakazu, Ichihara-shi Chiba 299-0108 (JP)
(74) Representative: Murgitroyd & Company
(86) International application number: PCT/JP2018/021622
(87) International publication number: WO 2018/225750

(57) **Abstract**

The silicone rubber composition for forming a fixing member according to the present invention comprises: (A) an organopolysiloxane having at least two alkenyl groups per molecule; (B) a graphite having an average particle diameter of 1 to 100 µm; and (C) a curing agent, and is suitable for forming a fixing member such as a fixing roll or fixing belt, which has high thermal conductivity at a low heat capacity and is less likely to form a skin layer even due to thermal aging. Furthermore, the fixing member according to the present invention is formed using the aforementioned composition and has high thermal conductivity and excellent heat resistance at a low heat capacity.

## Description

### TECHNICAL FIELD

The present invention relates to a silicone rubber composition for forming a fixing member, and to a fixing member formed using the composition.

### BACKGROUND ART

Silicone rubber compositions are widely used in the fields of household appliances, construction, automobiles, office equipment, and business machines in order to form a silicone rubber having excellent electrical insulating properties, heat resistance, weather resistance, and flame retardance. Specifically, utilizing a heat resistance thereof, a silicone rubber composition containing highly thermally conductive fillers such as alumina is utilized as a material for forming fixing members such as a fixing roll or fixing belt used in copying machines or laser printers (see Patent Document 1).

Despite the recent demand for low heat capacity silicone rubbers in order to shorten the startup time of copying machines or laser printers and reduce the standby power, the specific gravity of silicone rubber containing alumina is problematically large, accordingly increasing the heat capacity. Furthermore, regarding the fixing member, although many ways of coating the fluorine resin on the silicone rubber are employed, silicone rubbers containing alumina tend to form a hard skin layer on the surface due to thermal aging at high temperatures in the case of fluororesin coating, problematically changing the properties thereof as a fixing member.

### Prior Art Documents

### Patent Documents

Patent Document 1: JP 2002-072728 A

### SUMMARY OF THE INVENTION

### Problems to be Solved by the Invention

An object of the present invention is to provide a silicone rubber composition suitable for forming a fixing member, which has high thermal conductivity at a low heat capacity and is less likely to form a skin layer even due to thermal aging at high temperatures, along with a fixing member which is formed using the aforementioned composition and has high thermal conductivity and excellent heat resistance at a low heat capacity.

### Means for Solving the Problems

The silicone rubber composition for forming a fixing member according to the present invention comprises:
(A) 100 parts by mass of an organopolysiloxane having at least two alkenyl groups per molecule;
(B) 10 to 300 parts by mass of graphite having an average particle diameter of 1 to 100 µm; and
(C) an effective amount of a curing agent.

The aforementioned component (B) is preferably a spherical graphite.

The aforementioned component (C) is preferably: (C₁) an organopolysiloxane having at least two silicon atom-bonded hydrogen atoms per molecule, in an amount such that the silicon atom-bonded hydrogen atoms in this component are 0.1 to 10 moles with respect to 1 mole of the alkenyl group in component (A)); and (C₂) a hydrosilylation reaction catalyst in a catalyitic amount; and the present composition preferably further comprises (D) 0.001 to 5 parts by mass of a curing retarder.

Moreover, the fixing member according to the present invention is characterized by being formed by curing the silicone rubber composition described above.

This fixing member is preferably a fixing roll or a fixing belt.

### Effects of the Invention

The silicone rubber composition for forming a fixing member according to the present invention is characterized by forming a silicone rubber suitable for fixing members such as a fixing roll or fixing belt, which has high thermal conductivity at a low heat capacity and is less likely to form a skin layer even due to thermal aging at high temperatures. Moreover, the fixing member according to the present invention has high thermal conductivity and excellent heat resistance at a low heat capacity.

### Mode for Carrying Out the Invention

First, the silicone rubber composition for forming a fixing member according to the present invention will be described below in detail.

Component (A) is an organopolysiloxane having at least two alkenyl groups per molecule. Exemplary alkenyl groups in component (A) include alkenyl groups having 2 to 12 carbon atoms such as vinyl groups, allyl groups, butenyl groups, pentenyl groups, hexenyl groups, heptenyl groups, octenyl groups, nonenyl groups, decenyl groups, undecenyl groups, and dodecenyl groups; however, from the perspective of economic efficiency and reactivity, vinyl groups, allyl groups, hexenyl groups, and octenyl groups are preferable. While the bonding position of the alkenyl group in component (A) is not limited, for example, the alkenyl group may be bonded to silicon atoms at a terminal of a molecular chain and/or silicon atoms in a molecular chain. Moreover, exemplary groups that are bonded to silicon atoms other than alkenyl groups in component (A) include: alkyl groups having 1 to 12 carbon atoms such as methyl groups, ethyl groups, propyl groups, butyl groups, pentyl groups, hexyl groups, heptyl groups, octyl groups, nonyl groups, decyl groups, undecyl groups, and dodecyl groups; aryl groups having 6 to 12 carbon atoms such as phenyl groups, tolyl groups, xylyl groups, and naphthyl groups; aralkyl groups having 7 to 12 carbon atoms such as benzyl groups and phenethyl groups; and halogen substituted alkyl groups having 1 to 12 carbon atoms such as 3-chloropropyl groups and 3,3,3-trifluoropropyl groups; however, from the perspective of economic efficiency and heat resistance, methyl groups and phenyl groups are preferable. Furthermore, the silicon atoms in component (A) may be bonded to a small amount of hydroxyl groups or alkoxy groups such as methoxy groups, ethoxy groups, n-propoxy groups, i-propoxy groups, n-butoxy groups, sec-butoxy groups, and tert-butoxy groups as long as they do not impair the object of the present invention.

While the molecular structure of component (A) is not limited, examples thereof include a linear structure, branched structure, partially branched linear structure, and dendrimer structure, wherein component (A) may be a single organopolysiloxane having these molecular structures or a mixture of two or more organopolysiloxanes having these molecular structures.

While the viscosity of component (A) at 25°C is not limited, it is preferably within the range of 50 to 1,000,000 mPa·s, within the range of 200 to 500,000 mPa·s, or within the range of 1,000 to 100,000 mPa·s. This is due to the fact that if the viscosity of component (A) at 25°C is the lower limit of the aforementioned range or higher, the physical properties of the silicone rubber obtained will be enhanced; in contrast, if the viscosity is the upper limit of the aforementioned range or lower, the handleability of the silicone rubber composition obtained will be enhanced. Note that in the present invention, the viscosity can be measured using the rotational viscometer stipulated in JIS K 7117-1987 "Testing Methods for Viscosity with a Rotational Viscometer of Resins in Liquid Form." Note that, as part of component (A), the use of a gum organopolysiloxane having a degree of plasticity of 100 to 800 stipulated in JIS K 6249 is anticipated to suppress the sedimentation of component (B) during storage of the present composition.

Examples of such component (A) include: a dimethylpolysiloxane blocked with dimethylvinylsiloxy groups at both molecular chain terminals; a dimethylpolysiloxane blocked with methylphenylvinylsiloxy groups at both molecular chain terminals; a copolymer of dimethylsiloxane and methylphenylsiloxane blocked with dimethylvinylsiloxy groups at both molecular chain terminals; a copolymer of methylvinylsiloxane and dimethylsiloxane blocked with trimethylsiloxy groups at both molecular chain terminals; a copolymer of methylvinylsiloxane and dimethylsiloxane blocked with dimethylvinylsiloxy groups at both molecular chain terminals; a methyl(3,3,3-trifluoropropyl)polysiloxane blocked with dimethylvinylsiloxy groups at both molecular chain terminals; a copolymer of methyl(3,3,3-trifluoropropyl)siloxane and dimethylsiloxane blocked with dimethylvinylsiloxy groups at both molecular chain terminals; a copolymer of methylvinylysiloxane and dimethylsiloxane blocked with silanol groups at both molecular chain terminals; a copolymer of methylvinylysiloxane, methylphenylsiloxane and dimethylsiloxane blocked with silanol groups at both molecular chain terminals; and an organosiloxane copolymer including a siloxane unit represented by the formula: (CH₃)₃SiO_{1/2}, a siloxane unit represented by the formula: (CH₃)₂(CH₂=CH)SiO_{1/2}, a siloxane unit represented by the formula: CH₃SiO_{3/2}, and a siloxane unit represented by the formula: (CH₃)₂SiO_{2/2}.

Component (B) is a graphite having an average particle diameter within the range of 1 to 100 µm, preferably within the range of 1 to 50 µm, within the range of 1 to 40 µm, within the range of 5 to 40 µm, within the range of 5 to 35 µm, within the range of 5 to 30 µm, or within the range of 10 to 30 µm. This is due to the fact that if the average particle diameter of component (B) is the lower limit of the aforementioned range or higher, a large amount of component (B) can be blended in the silicone rubber composition; whereas, if the average particle diameter is the upper limit of the aforementioned range or lower, the physical properties of the silicone rubber obtained are favorable. Note that the average particle diameter can be determined as a cumulative weight average value, D50 (or median diameter), etc. by a particle size distribution meter using an analytical means such as a laser light diffraction method, for example.

Component (B) may be either natural or artificial, with examples of the shape thereof including a spherical, flacke, scale like shape, etc., and examples of component (B) which can be used including: a single graphite having these shapes; or a graphite mixture combining two or more types; wherein, at least a spherical graphite is preferably used because a silicone rubber having a relatively low heat capacity and high thermal conductivity is easily formed.

Examples of such component (B) which are available include: trade names WF-15C, G-6S, and BF-3AK, manufactured by Chuetsu Graphite Works Co., Ltd.; trade names WF-010, WF-015, FT-2, and JSG-25 manufactured by Fuji Graphite Works Co., Ltd.; trade names CGB-20 and CGB-50 manufactured by Nippon Graphite Industries, Co., Ltd.; or trade names SG-BH8, SG-BH, SG-BL30, and SG-BL40 manufactured by Ito Graphite Co., Ltd.

The content of component (B) is within the range of 10 to 300 parts by mass, preferably within the range of 10 to 250 parts by mass or within the range of 20 to 200 parts by mass, with respect to 100 parts by mass of component (A). This is due to the fact that if the content of component (B) is the lower limit of the aforementioned range or higher, the thermal conductivity of the silicone rubber obtained will be increased while the heat capacity can be decreased; in contrast, if the content is the upper limit of the aforementioned range or lower, the handleability of the silicone rubber composition obtained will be favorable.

Component (C) is a curing agent; wherein, if the present composition is of a type which is cured by a hydrosilylation reaction, component (C) is (C₁) an organopolysiloxane having at least two silicon atom bonded hydrogen atoms per molecule and (C₂) a hydrosilylation reaction catalyst, while if the composition is of a type which is cured by a radical reaction, component (C) is (C₃) an organic peroxide.

Component (C₁) is an organopolysiloxane having at least two silicon atom-bonded hydrogen atoms per molecule. While the bonding position of the silicon atom-bonded hydrogen atoms in component (C₁) is not limited, the silicon atom-bonded hydrogen atoms may be bonded to silicon atoms at a terminal of a molecular chain and/or silicon atoms in a molecular chain. Moreover, exemplary groups that are bonded to silicon atoms other than hydrogen atoms in component (C₁) include: alkyl groups having 1 to 12 carbon atoms such as methyl groups, ethyl groups, propyl groups, butyl groups, pentyl groups, hexyl groups, heptyl groups, octyl groups, nonyl groups, decyl groups, undecyl groups, and dodecyl groups; aryl groups having 6 to 20 carbon atoms such as phenyl groups, tolyl groups, and xylyl groups; aralkyl groups having 7 to 20 carbon atoms such as benzyl groups and phenethyl groups; and halogen substituted alkyl groups having 1 to 12 carbon atoms such as 3-chloropropyl groups and 3,3,3-trifluoropropyl groups; however, from the perspective of economic efficiency and heat resistance, methyl groups and phenyl groups are preferable. Furthermore, the silicon atoms in component (C₁) may be bonded to a small amount of hydroxyl groups or alkoxy groups such as methoxy groups, ethoxy groups, n-propoxy groups, i-propoxy groups, n-butoxy groups, sec-butoxy groups, and tert-butoxy groups as long as they do not impair the object of the present invention.

While the molecular structure of component (C₁) is not limited, examples thereof include a linear structure, branched structure, partially branched linear structure, and dendrimer structure, wherein component (C₁) may be a single organopolysiloxane having these molecular structures or a mixture of two or more organopolysiloxanes having these molecular structures.

While the kinematic viscosity of component (C₁) at 25°C is not limited, it is preferably within the range of 1 to 100,000 mm²/s, within the range of 1 to 10,000 mm²/s, or within the range of 1 to 5,000 mm²/s. This is due to the fact that if the kinematic viscosity of component (C₁) at 25°C is the lower limit of the aforementioned range or higher, the physical properties of the silicone rubber obtained will be enhanced; in contrast, if the viscosity is the upper limit of the aforementioned range or lower, the handleability of the silicone rubber composition obtained will be enhanced. Note that in the present invention, the kinematic viscosity can be measured using the Ubbelohde viscometer stipulated in JIS Z 8803-1991 "Viscosity of liquid - Method of measurement."

Examples of such component (C₁) include: a methylhydrogenpolysiloxane blocked with trimethylsiloxy groups at both molecular chain terminals; a copolymer of dimethylsiloxane and methylhydrogensiloxane blocked with trimethylsiloxy groups at both molecular chain terminals; a dimethylpolysiloxane blocked with dimethylhydrogensiloxy groups at both molecular chain terminals; a methylhydrogenpolysiloxane blocked with dimethylhydrogensiloxy groups at both molecular chain terminals; a copolymer of dimethylsiloxane and methylhydrogensiloxane blocked with dimethylhydrogensiloxy groups at both molecular chain terminals; a cyclic methylhydrogenpolysiloxane; an organosiloxane including a siloxane unit represented by the formula: (CH₃)₃SiO_{1/2}, a siloxane unit represented by the formula: (CH₃)₂HSiO_{1/2}, and a siloxane unit represented by the formula: SiO_{4/2}; tetrakis(dimethylhydrogensiloxy)silane; and methyl tris(dimethylhydrogensiloxy)silane.

The content of component (C₁) is in an amount such that the silicon atom-bonded hydrogen atoms in component (C₁) are within a range of 0.1 to 10 moles, preferably within a range of 0.1 to 5 moles or within a range of 0.5 to 5 moles, with respect to 1 mole of silicon atom-bonded alkenyl groups in component (A). This is due to the fact that if the content of component (C₁) is the lower limit of the aforementioned range or higher, the silicone rubber composition obtained will be sufficiently cured; whereas, if the content is the upper limit of the aforementioned range or lower, the heat resistance of the silicone rubber obtained will be enhanced.

The hydrosilylation reaction catalyst for component (C₂) is a catalyst for promoting curing of the present composition. Component (C₂) includes: platinum based catalysts such as platinum fine powder, platinum black, chloroplatinic acid, platinum tetrachloride, alcohol modified chloroplatinic acid, olefin complexes of platinum, alkenylsiloxane complexes of platinum, and carbonyl complexes of platinum; platinum based catalysts of thermoplastic organic resin powders, which contain these platinum based catalysts, such as a methyl methacrylate resin, polycarbonate resin, polystyrene resin, and silicone resin; rhodium based catalysts represented by Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O₂), RhX₃[(R)₂S]₃, (R'₃P)₂Rh(CO)X, (R²₃P)₂Rh(CO)H, Rh₂X₂Y₄, H_{f}Rh_{g}(En)ₕClᵢ, or Rh[O(CO)R]₃₋ⱼ(OH)ⱼ (wherein X is a hydrogen atom, chlorine atom, bromine atom, or iodine atom; Y is an alkyl group such as a methyl group and ethyl group, or CO, C₈H₁₄, and 0.5C₈H₁₂; R is an alkyl group such as a methyl group, ethyl group, or propyl group; a cycloalkyl group such as a cycloheptyl group and a cyclohexyl group; or an aryl group such as a phenyl group and xylyl group; R' is an alkyl group such as a methyl group, ethyl group, and propyl group; an aryl group such as a phenyl group, tolyl group, and xylyl group; an alkoxy group such as a methoxy group and ethoxy group; or an allyloxy group such as a phenoxy group; En is an olefin such as ethylene, propylene, butene, and hexene; "f" is 0 or 1; "g" is 1 or 2; "h" is an integer of 1 to 4; "i" is 2, 3, or 4; and "j" is 0 or 1.); and iridium based catalysts represented by the formula: Ir(OOCCH₃)₃, Ir(CsH₇O₂)₃, [Ir(Z)(En)₂]₂, or [Ir(Z)(Dien)]₂ (wherein Z is a chlorine atom, a bromine atom, an iodine atom, or an alkoxy group such as a methoxy group and ethoxy group; En is an olefin such as ethylene, propylene, butene, and hexene; and Dien is cyclooctadiene.)

In the present composition, the content of component (C₂) is a catalytic amount and is preferably in an amount such that the platinum group metal in this component is, in mass units, within a range of 0.01 to 1,000 ppm, or within a range of 0.1 to 500 ppm, with respect to the total amount of components (A) and (C₁).

Component (C₃) is an organic peroxide and may be used as a catalyst for promoting the crosslinking reaction of component (A) in an organic peroxide curable silicone rubber composition, with conventionally known components capable of being used. Examples of component (C₃) include dicumyl peroxide, di-tert-butyl peroxide, 2,5-dimethyl-2,5-di(tert-butyl peroxy)hexane, benzoyl peroxide, bis(2-methylbenzoyl)peroxide, bis(4-methylbenzoyl)peroxide, tert-butylperoxybenzoate, and tert-butylperoxyisopropyl carbonate.

While not limited thereto, the content of component (C₃) is preferably within a range of 0.01 to 10 parts by mass, more preferably within a range of 0.05 to 10 parts by mass, further preferably within a range of 0.05 to 5 parts by mass, even further preferably within a range of 0.01 to 5 parts by mass, with respect to 100 parts by mass of component (A). This is due to the fact that if the content of component (C₃) is the lower limit of the aforementioned range or higher, the silicone rubber composition obtained will be sufficiently cured; whereas, if the content is the upper limit of the aforementioned range or lower, air bubbles, etc. will be less likely to be generated in the silicone rubber obtained.

When the present composition is of the type which is cured by a hydrosilylation reaction, the present composition may comprise a curing retarder (D) in order to adjust the curing speed thereof and improve the handleability thereof. Examples of component (D) may include: alkyne alcohols such as 1-ethynyl cyclohexan-1-ol, 2-methyl-3-butyn-2-ol, 3,5-dimethyl-1-hexyn-3-ol, and 2-phenyl-3-butyn-2-ol; enyne compounds such as 3-methyl-3-penten-1-yne and 3,5-dimethyl-3-hexen-1-yne; methyl alkenylsiloxane oligomers such as 1,3,5,7-tetramethyl-1,3,5,7-tetravinyl cyclotetrasiloxane, 1,3,5,7-tetramethyl-1,3,5,7-tetrahexenyl cyclotetrasiloxane; alkynoxysilanes such as dimethyl bis(3-methyl-1-butyn-3-oxy)silane and methylvinyl bis(3-methyl-1-butyn-3-oxy)silane; alkyneoxysilane compounds such as methyl tris(1-methyl-1-phenyl-propyneoxy)silane, dimethyl bis(1-methyl-1-phenyl-propyneoxy)silane, methyl tris(1,1 -dimethyl-propyneoxy)silane, dimethylbis(1,1 -dimethyl-propyneoxy)silane; and benzotriazoles. While the content of this component (D) is not limited, it is preferably within a range of from 0.0001 to 5 parts by mass, within a range of from 0.01 to 5 parts by mass, or within a range of from 0.01 to 3 parts by mass, with respect to 100 parts by mass of component (A).

In order to further improve the thermal conductivity of the obtained silicone rubber, the present composition may contain thermally conductive fillers such as ground quartz, boron nitride, silicon carbide, carbon fibers, and carbon nanotubes as long as they do not impair the object of the present invention. While not limited thereto, the content of such a thermally conductive filler is preferably within a range of 200 parts by mass or less with respect to 100 parts by mass of component (A).

The present composition may comprise iron oxide in order to improve the heat resistance of the obtained silicone rubber. While the average particle diameter of the iron oxide is not limited, the average particle diameter is suitably within a range of 0.01 to 0.5 µm, within a range of 0.02 to 0.3 µm, or within a range of 0.05 to 0.2 µm, in terms of good dispersibility. While not limited thereto, the content of the iron oxide is preferably within a range of 0.1 to 20 parts by mass, or within a range of 0.5 to 15 parts by mass, with respect to 100 parts by mass of component (A), as it does not deteriorate the handleability of the present composition but can improve the heat resistance of the silicone rubber obtained.

As along as the object of the present invention is not impaired, the present composition may comprise: silica fine particles such as fumed silica, fused silica, burned silica, precipitated silica, spherical silica of the sol-gel method, and diatomaceous earth; reinforcing silicone based resins; non-reinforcing fillers such as clay, calcium carbonate, and titanium dioxide; carbon black such as furnace black, lamp black, channel black, thermal black, oil black, and acetylene black; heat resistance improvers such as cerium oxide and cerium hydroxide; internal mold release agents such as silicone oils; various types of carbon functional silane for improving adhesion and molding processability; nitrogen compounds and halogen compounds which impart flame retardancy; etc.

Furthermore, in order to uniformly blend component (B) and other fillers, the present composition may also comprise surface treatment agents thereof. Exemplary surface treatment agents include: organoalkoxysilanes such as methyltrimethoxysilane, methyltriethoxysilane, vinyltrimethoxysilane, y-methacryloxypropyltrimethoxysilane, and n-octyltrimethoxysilane; tetraalkoxysilanes or partially hydrolyzed condensates thereof, such as tetramethoxysilane, tetraisopropoxysilane, and ethyl polysilicate; organohalosilanes such as dimethyldichlorosilane and methyltrichlorosilane; organosilazanes such as hexamethyldisilazane; and siloxanes such as diorganosiloxane oligomers blocked with silanol groups, and diorganosiloxane oligomers containing silicon atom-bonded alkoxy groups, diorganopolysiloxanes containing silicon atom-bonded alkoxy groups, and cyclic diorganosiloxane oligomers.

The present composition can be easily prepared by uniformly mixing the abovementioned components (A) to (C), and if necessary, any other components, by a known mixing means. While not limited thereto, exemplary mixing means include planetary mixers, kneader mixers, Ross mixers, and Hobart mixers. In addition, when the present composition is of a type which is cured by a hydrosilylation reaction, the mixing order of the components is not limited, with any mixing order possible. However, in order to be able to obtain a uniform composition, it is preferable to uniformly mix, under heating, part of component (A), component (B), and other fillers as required, then mix the remaining component (A) and other components.

In addition, when the present composition is of a type which is cured by a hydrosilylation reaction, the composition may be a one part composition, but may also be a two part composition which is mixed when used in consideration of storage stability. When the two part composition is used, one composition is generally a mixture of components (A), (B), and (C₂), along with any other components, while the other composition is generally a mixture of components (A), (B), and (C₁), along with any other components.

While the temperature at which the present composition is cured is not limited, it can generally be cured well within a range of room temperature to 220°C, within a range of 60 to 180°C, or within a range of 80 to 150°C. In order to sufficiently cure the silicone rubber, so-called step curing is preferably carried out in which the composition is heated at room temperature to 100°C, or 60 to 80°C, then heated and cured at 80 to 180°C or 100 to 150°C. Secondary curing (thermal aging) is also preferably carried out at 150 to 250°C for approximately 10 minutes to two hours in order to remove volatile components in the silicone rubber.

While the hardness of the silicone rubber obtained by curing the present composition is not limited, the hardness (so-called Asker C hardness) measured using a type C durometer hardness tester stipulated in JIS K 7312 is preferably within a range of 5 to 70 or within a range of 10 to 70. The hardness can be adjusted by reducing the crosslinking density of the silicone rubber, and can be adjusted, for example, by the content of alkenyl groups in component (A), the content of silicon atom-bonded hydrogen atoms in component (C₁), or the molar ratio of silicon atom-bonded hydrogen atoms in component (C₁) with respect to the alkenyl groups in component (A), etc.

Moreover, while the thermal conductivity of the silicone rubber obtained by curing the present composition is not limited, it is preferably 0.5 W/m·K or more, 0.5 to 3 W/m·K, or 0.5 to 2 W/m·K.

Next, the fixing member according to the present invention will be described in detail.

The fixing member according to the present invention is formed by curing the silicone rubber composition described above. Exemplary fixing members include a fixing roll or a fixing belt. Specific examples include: a fixing roll in which a silicone rubber layer is interposed on the outer peripheral surface of the core metal; or a fixing belt in which a silicone rubber layer is interposed on the front and back surfaces of a base material such as an endless belt formed from a thin film of a heat resistant resin or metal; and further, a fluorine based resin coated fixing roll or a fluorine based resin coated fixing belt in which a fluororesin layer is formed as a surface layer on the silicone rubber layer described above. The fixing member is made from a silicone rubber which has a small permanent compression set at a low heat capacity and is less likely to form a skin layer even due to thermal aging, thereby making it useful as a fixing roll or fixing belt for copying machines or laser beam printers.

The material, dimensions, etc. of the core metal of the fixing roll or the belt substrate of the fixing belt are appropriately selected in accordance with the type of roll or belt; however, the elasticity of the silicone rubber can be sufficiently exhibited and heat can be efficiently transferred. Therefore, the thickness of the silicone rubber layer in the fixing roll is preferably within a range of 0.1 to 5.0 mm or within a range of 0.3 to 3.0 mm. On the other hand, the thickness of the silicone rubber layer in the fixing belt is preferably within a range of 0.05 to 2.0 mm or within a range of 0.1 to 1.0 mm because the thickness of the silicone rubber layer can be made uniform while heat can be efficiently transferred.

Exemplary fluororesins include polytetrafluoroethylene resin (PTFE), tetrafluoroethylene-perfluoroalkyl vinyl ether copolymer resin (PFA), fluorinated ethylene-propylene copolymer resin (FEP), polyvinylidene fluoride resin (PVDF), and polyvinyl fluoride resin.

In order to improve the adhesion between the fluorine resin layer and the silicone rubber layer, the surfaces thereof are preferably treated using corona discharge treatment, plasma treatment, the sodium naphthalene method, the liquid ammonia method, the sputter etching method, the excimer laser method, etc. Furthermore, in order to improve the adhesion durability, the surfaces thereof may be subjected to primer treatment.

While not limited thereto, the thickness of the fluororesin layer is generally 0.1 mm or less, preferably within a range of 0.1 to 100 µm or within a range of 1 to 50 µm.

### Examples

The silicone rubber composition for forming a fixing member and the fixing member according to the present invention will be described below in further detail with reference to examples. Note that the properties in the examples are the values at 25°C, which were measured as follows.

### [Viscosity]

The viscosity (mPa·s) of the organopolysiloxane at 25°C is the value measured using a type B viscometer in accordance with JIS K7117-1, while the kinematic viscosity (mm²/s) is the value measured using a Ubbelohde viscometer in accordance with JIS Z 8803.

### [Density]

The density of the silicone rubber was measured in accordance with JIS K 6268.

### [Hardness]

The hardness of the silicone rubber was measured using the type C durometer hardness tester stipulated in JIS K 7312.

### [Thermal conductivity]

The thermal conductivity of the silicone rubber was measured using a rapid thermal conductivity meter QTM-500 (manufactured by Kyoto Electronics Manufacturing Co., Ltd.).

### [Heat resistance]

The silicone rubber was left to stand for 40 minutes in a hot air circulation oven at 330°C, then cooled to room temperature. When the surface of the silicone rubber after heat treatment was observed by visual inspection and finger touching, no change in the surface state was evaluated as "o," while a change in the surface state was evaluated as "x."

### [Change in hardness]

A 6 mm thick silicone rubber sheet was made and passed 10 times between the rolls of a 4 mm gap. Subsequently, the hardness of the silicone rubber was measured using the type C durometer hardness tester stipulated in JIS K 7312, wherein the hardness after passing once was used as the initial value to indicate the difference with respect to the initial hardness.

### [Examples 1 to 8 and Comparative Example 1]

A silicone rubber composition for forming a fixing member was prepared by uniformly mixing the below mentioned components in the composition indicated in Table 1. The properties of the obtained silicone rubbers are indicated in Table 1. Note that in Table 1, SiH/Vi represents the molar ratio of silicon atom-bonded hydrogen atoms in component (C₁) with respect to vinyl groups in component (A).

The following components were used as component (A).
Component (a-1): a copolymer of dimethylsiloxane and methylvinylsiloxane blocked with trimethylsiloxy groups at both molecular chain terminals and having a viscosity of 8,000 mPa·s (content of vinyl groups: 0.31 mass%)
Component (a-2): a dimethylpolysiloxane blocked with dimethylvinylsiloxy groups at both molecular chain terminals and having a viscosity of 10,000 mPa·s (content of vinyl groups: 0.13 mass%)
Component (a-3): a dimethylpolysiloxane blocked with dimethylvinylsiloxy groups at both molecular chain terminals and having a viscosity of 40,000 mPa·s (content of vinyl groups: 0.09 mass%)
Component (a-4): a copolymer of dimethylsiloxane and methylvinylsiloxane blocked with trimethylsiloxy groups at both molecular chain terminals and having a viscosity of 40,000 mPa·s (content of vinyl groups: 0.13 mass%)

The following component was used as component (B).
Component (b-1): spherical graphite particles having an average particle diameter of 15 µm
The following components were used for comparison.
Component (b-2): amorphous alumina particles having an average particle diameter of 2.2 µm
Component (b-3): spherical alumina particles having an average particle diameter of 10 µm
Component (b-4): amorphous alumina particles having an average particle diameter of 2.5 µm

The following component was used as component (C₁).
Component (c-1): a copolymer of dimethylsiloxane and methylhydrogensiloxane blocked with a dimethylhydrogensiloxy group and a trimethylsiloxy group at both molecular chain terminals and having a kinematic viscosity of 10 mm²/s (content of silicon atom-bonded hydrogen atoms: 0.39 mass%)

The following component was used as component (C₂).
Component (c-2): a 1,3-divinyltetramethyldisiloxane solution of a 1,3-divinyltetramethyldisiloxane complex of platinum (content of platinum metal: approximately 7,000 ppm)

The following component was used as component (D).
Component (d): a mixture of 2 parts by mass of 1-ethynylcyclohexan-1-ol and 98 parts by mass of a dimethylpolysiloxane blocked with dimethylvinylsiloxy groups at both molecular chain terminals and having a viscosity of 10,000 mPa·s (content of vinyl groups: 0.13 mass%)

The following components were used as other components.
Quartz powder: quartz powder having an average particle diameter of 5 µm (Crystalite VX-S2 manufactured by Tatsumori, Ltd.)
Iron oxide MB: a mixture of 40 parts by mass of iron oxide having an average particle diameter of 0.17 µm (trade name manufactured by Bayer AG: Bayferrox) and 60 parts by mass of a polydimethylsiloxane blocked with dimethylvinylsiloxy groups at both molecular chain terminals and having a viscosity of 10,000 mPa·s (content of vinyl groups: 0.13 mass%)
Surface treatment agent: a dimethylpolysiloxane blocked with silanol groups at both molecular chain terminals and having a viscosity of 40 mPa·s

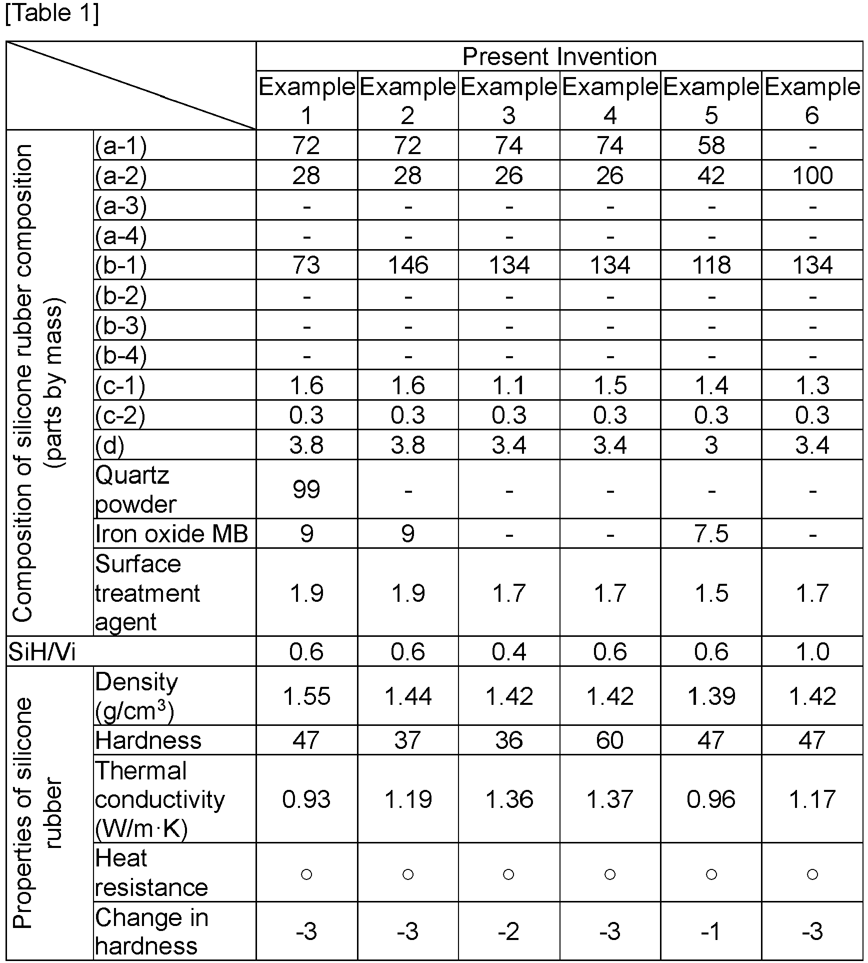

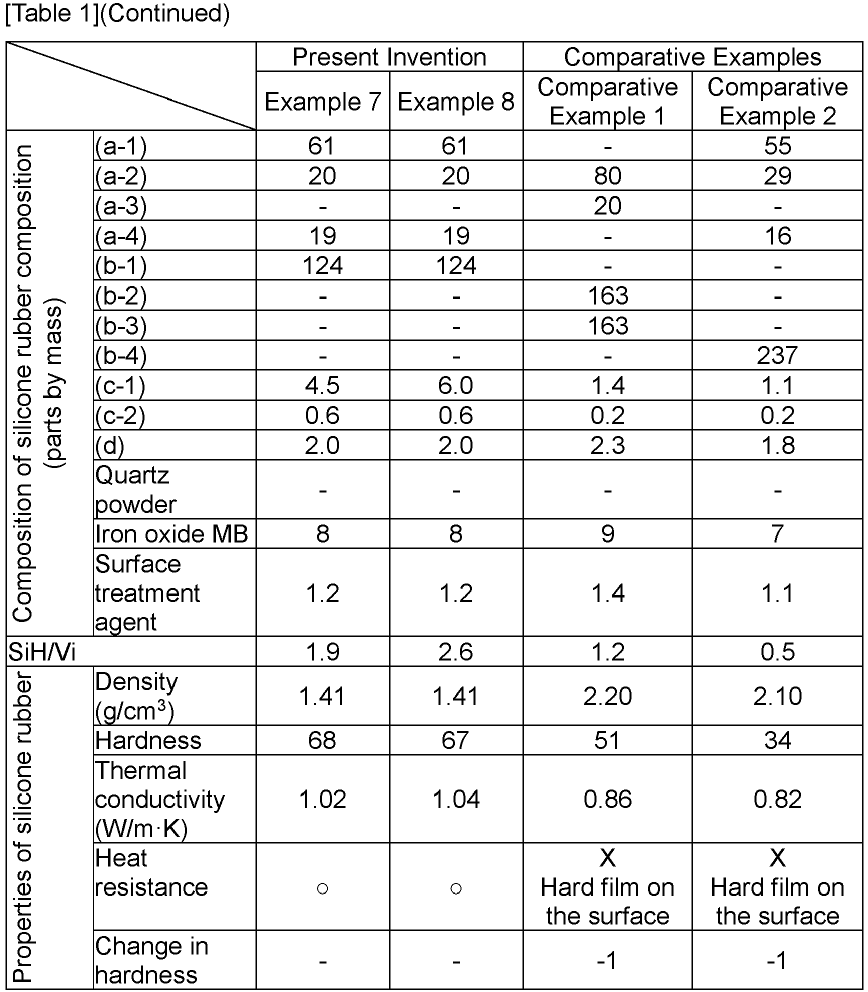

### [Examples 9 to 13]

A silicone rubber composition for forming a fixing member was prepared by uniformly mixing the below mentioned components in the composition indicated in Table 2, in addition to the components described above. The properties of the obtained silicone rubbers are indicated in Table 2. Note that in Table 2, SiH/Vi represents the molar ratio of silicon atom-bonded hydrogen atoms in component (C₁) with respect to vinyl groups in component (A).

The following components were further used as component (A).
Component (a-5): a dimethylpolysiloxane blocked with dimethylvinylsiloxy groups at both molecular chain terminals and having a viscosity of 2,000 mPa·s (content of vinyl groups: 0.23 mass%)
Component (a-6): a gum-like copolymer of dimethylsiloxane and methylvinylsiloxane (content of vinyl groups: 0.22 mass%) having at least two vinyl groups per molecule, with a degree of plasticity (stipulated in JIS K 6249) of 160

The following component was further used as another component. Carbon black MB: a mixture of 20 parts by mass of acetylene black (Denka Black: manufactured by Denka Company Limited) and 80 parts by mass of a polydimethylsiloxane blocked with dimethylvinylsiloxy groups at both molecular chain terminals and having a viscosity of 2,000 mPa·s (content of vinyl groups: 0.23 mass%)

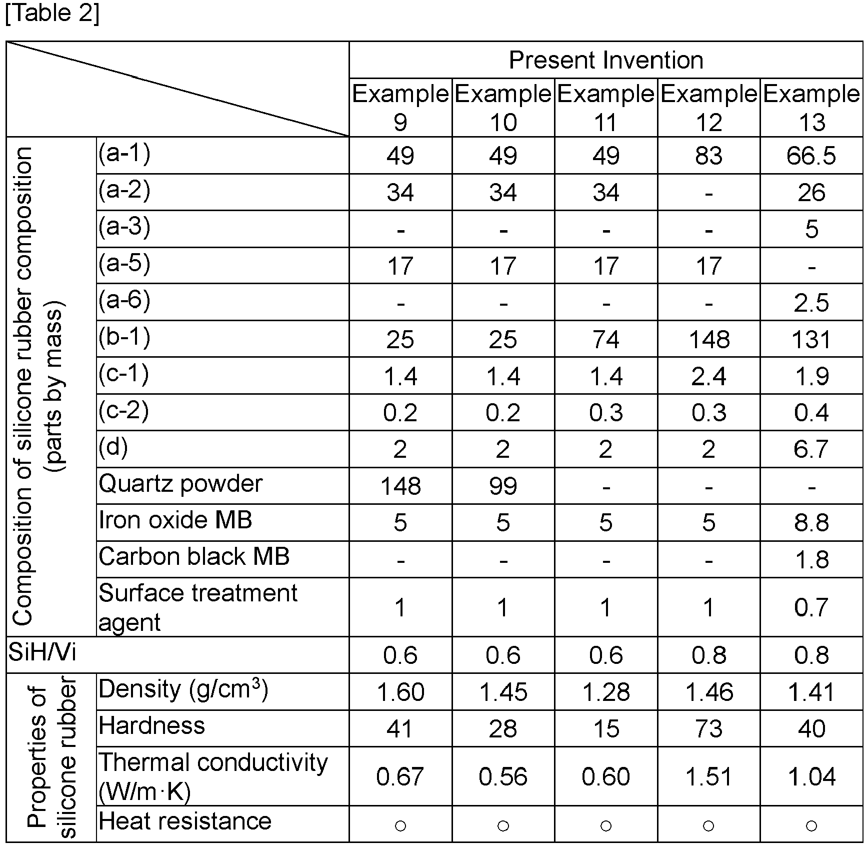

### Industrial Applicability

The present composition forms a silicone rubber which has high thermal conductivity at a low heat capacity, is less likely to form a skin layer even due to thermal aging, and is therefore suitable as a material for forming a fixing member such as a fixing roll or fixing belt used in copying machines or laser printers.

## Claims

1. A silicone rubber composition for forming a fixing member, comprising:
(A) 100 parts by mass of an organopolysiloxane having at least two alkenyl groups per molecule;
(B) 10 to 300 parts by mass of a graphite having an average particle diameter of 1 to 100 µm; and
(C) an effective amount of a curing agent.

2. The silicone rubber composition for forming a fixing member according to claim 1, wherein component (B) is a spherical graphite.

3. The silicone rubber composition for forming a fixing member according to claim 1, wherein component (C) is (C₁) an organopolysiloxane having at least two silicon atom-bonded hydrogen atoms per molecule, in an amount such that the silicon atom-bonded hydrogen atoms in this component are 0.1 to 10 moles with respect to 1 mole of the alkenyl group in component (A); and (C₂) a hydrosilylation reaction catalyst in a catalyst amount.

4. The silicone rubber composition for forming a fixing member according to claim 3, further comprising: (D) 0.001 to 5 parts by mass of a curing retarder with respect to 100 parts by mass of component (A).

5. A fixing member formed by curing the silicone rubber composition for forming a fixing member according to any one of claims 1 to 4.

6. The fixing member according to claim 5, wherein the fixing member is a fixing roll or a fixing belt.
